# EUROPÄISCHE PATENTSCHRIFT

(11) **EP 2 019 798 B1**
(45) Veröffentlichungstag und Bekanntmachung des Hinweises auf die Patenterteilung: **03.11.2010**
(21) Anmeldenummer: 07725445.6
(22) Anmeldetag: 23.05.2007
(51) Int. Cl.: B65G 1/137

(54) **VERFAHREN ZUM BETREIBEN EINER KOMMISSIONIERANLAGE**
METHOD FOR OPERATING A PICKING INSTALLATION
PROCÉDÉ POUR FAIRE FONCTIONNER UNE INSTALLATION DE PRÉPARATION DE COMMANDE

(30) Priorität: 24.05.2006 DE 102006025618
(43) Veröffentlichungstag der Anmeldung: 04.02.2009
(73) Patentinhaber: SSI Schäfer Noell GmbH Lager-und Systemtechnik, 97232 Giebelstadt (DE)
(72) Erfinder: SCHÄFER, Gerhard, 57290 Neunkirchen (DE)
(74) Vertreter: Witte, Weller & Partner
(86) Internationale Anmeldenummer: PCT/EP2007/004545
(87) Internationale Veröffentlichungsnummer: WO 2007/134841

(56) Entgegenhaltungen:
- EP-A- 1 516 832
- DE-A1- 10 313 576

## Beschreibung

Die vorliegende Erfindung betrifft ein Verfahren zum Betreiben einer Kommissionieranlage, wobei die Kommissionieranlage ein Hochregallager, mindestens ein Tablarlager, mindestens eine Packstation und mindestens eine Versandstation aufweist.

Eine solche Kommissionieranlage ist aus der DE 103 13 576 B4 bekannt.

Die in der DE 103 13 576 offenbarte Kommissionieranlage stellt ein Logistiksystem dar, das nahezu vollständig automatisiert ist, um Kosten und Zeit zu sparen. Eine Einlagerung von Artikeln in ein Hochregallager sowie die Auslagerung aus diesem erfolgt dabei mit automatisierten und rechnergesteuerten Regalfahrzeugen.

Bei diesem Hochregallager handelt es sich um ein herkömmliches Regallager, welches als Palettenlager ausgebildet ist. Artikel bzw. Waren werden auf Anlieferungspaletten in das Palettenlager gelagert. Mit dem Regallager ist ein Tablarlager über eine automatisierte Fördertechnik verbunden. Im Tablarlager werden zu kommissionierende Artikel bzw. Verpackungseinheiten einzeln auf Einzeltablaren gelagert.

Somit ist also jedes Tablar mit einer einzigen Verpackungseinheit beladen. Eine Verpackungseinheit wird in der internationalen Logistik bei Stückgut auch als "Kollo" (Plural "Kolli"; abgeleitet vom italienischen "collo") bezeichnet. Eine Verpackungseinheit ist eine kleinste Einheit einer Warensendung bzw. eines Kommissionierauftrags. Ein Paket aus zwölf mit einer Folie miteinander verschweißten Milchtüten beispielsweise stellt eine Verpackungseinheit dar.

Als Stückgut wird in der Logistik alles bezeichnet, was sich am Stück transportieren lässt, beispielsweise Kisten, beladene Paletten, Maschinen oder Anlageteile, Kabel-, Papier- oder Blechrollen und Fässer. Kein Stückgut ist beispielsweise eine Flüssigladung oder sind Gase, die ohne eigenen Behälter in z.B. ein Transportfahrzeug gepumpt werden. Sand, Kohle, Getreide und vergleichbare Feststoffe sind Massen-, Schütt- oder Sauggut. Die vorliegende Erfindung ist hauptsächlich auf Stückgüter anwendbar.

In der Kommissionieranlage der DE 103 13 576 werden Paletten aus dem Palettenlager mittels einer Depalettierungseinrichtung auf eine an sich bekannte Art und Weise automatisch mit Greif- und Saugmitteln in einzelne Verpackungseinheiten auf Einzeltablare vereinzelt. So vereinzelte Verpackungseinheiten werden anschließend in das Tablarlager eingelagert, welches als Puffer dient. Wenn ein Artikel im Tablarlager beispielsweise aufgrund von Kommissionierung knapp wird, d.h. wenn nur noch ein Vorrat für 24 oder 48 Stunden vorhanden ist, werden Artikel aus dem Palettenlager angefordert, von den Paletten entnommen und mittels der Depalettierungseinrichtung vollständig vereinzelt, und anschließend einzeln auf die Tablare geladen. Diese Anlage der DE 103 13 576 ist aufgrund der vielen Geräte sehr teuer und braucht sehr viel Platz.

Ferner werden heutzutage hohe Ansprüche an die Konzeptionierung eines Kommissionierlagers, insbesondere im Bereich des Einzelhandels, gestellt.

Eine übliche Kommissionieranlage sollte dazu in der Lage sein, 50.000 bis 100.000 und mehr Verpackungseinheiten pro Tag zu kommissionieren. Dies entspricht ca. 1.000 bis 2.500 und mehr Paletten pro Tag. Eine Kommissionierung erfolgt gemäß Kommissionieraufträgen. Ein Kommissionierauftrag besteht in der Regel aus mehreren Auftragszeilen. Jede Auftragszeile wiederum kann aus mehreren Verpackungseinheiten eines (einzigen) Artikeltyps bestehen. Zur Abarbeitung eines Kommissionierauftrags werden die verschiedenen Artikeltypen in gemäß der Vorgabe (Auftragszeile) vorbestimmter Anzahl aus dem Tablarlager ausgelagert und auf einen Versandträger, wie z.B. einen Rollcontainer oder eine Europalette (800 mm x 1.200 mm), gepackt.

In der bekannten Kommissionieranlage der DE 103 13 576 werden vollständig beladene Paletten aus dem Hochregallager vollständig vereinzelt und automatisiert auf Einzeltablaren in das Tablarlager verbracht. Diese Vorgehensweise bedingt, dass das Tablarlager über eine ausreichende Anzahl von Stellplätzen verfügt. Unter einem Stellplatz ist ein Lagerplatz für ein Tablar im Tablarlager zu verstehen.

Bedingt durch die große Anzahl von Stellplätzen sind auch dementsprechend viele Lagermaschinen (Regalbediengeräte) erforderlich, um die Einzeltablare in die Vielzahl von Stellplätzen einzulagern und auszulagem. Die Vielzahl von Stellplätzen wiederum verteilt sich über eine Vielzahl von Regalen des Tablarlagers. Viele Regale wiederum bedeuten einen großen Raumbedarf zum Aufstellen dieser Regale.

Weiterhin macht der Einsatz von vielen Lagermaschinen eine Koordination derselben äußerst komplex. Ein übergeordneter Lagerverwaltungsrechner muss möglichst fern in die Zukunft planen, um der erheblichen Anzahl von so genannten Lagerspielen Herr zu werden. Unter einem "Lagerspiel" bzw. "Wechselspiel" wird nachfolgend ein Vorgang verstanden, bei dem ein Ladehilfsmittel (Tablar, Palette, Behälter, etc.) zum Zwecke der Kommissionierung aus dem Lager geholt wird, um anschließend zu einem Kommissionierplatz transportiert und auf einen Versandträger gepackt zu werden, der wiederum versandt wird.

Eine hohe Anzahl von Lagerspielen wiederum verringert die Flexibilität und Dynamik des Gesamtsystems. Sind nahezu alle Lagermaschinen ständig im Einsatz, und ist deren Koordination komplex verwoben und weit vorausgeplant, kann schlecht bis überhaupt nicht auf plötzlich auftretende Ereignisse, wie z.B. eine Priorisierung eines Kommissionierauftrags von einem unteren Prioritätsniveau auf ein oberes Prioritätsniveau, reagiert werden.

Es ist daher eine Aufgabe der vorliegenden Erfindung, ein Verfahren zum Betreiben einer Kommissionieranlage vorzusehen, welches die Effizienz, Flexibilität und Dynamik des Gesamtsystems verbessert. Insbesondere soll der Raumbedarf für das Tablarlager reduziert und der Planungsaufwand für die Koordinierung der Lagermaschinen verringert werden. Vorzugsweise sollen die Investitionskosten drastisch gesenkt werden.

Diese Aufgabe wird mit dem Verfahren zum Betreiben einer Kommissionieranlage des Anspruchs 1 gelöst.

Die Erfinder haben erkannt, dass mit dem vorgeschlagenen Verfahren bei gleicher Eingangsleistung (z.B. 150 Paletten/h) und Ausgangsleistung (z.B. 150 Paletten/h) für zu kommissionierende Artikel die Anzahl von Stellplätzen im Tablarlager, und somit die Anzahl von Regalen selbst, stark reduziert werden kann. Mit der Reduktion der Stellplätze und Regale geht eine Reduktion von Lagermaschinen zum Einlagern und Auslagern von Verpackungseinheiten in das Tablarlager bzw. aus dem Tablarlager einher.

Die Erfinder haben ferner erkannt, dass durch eine Transformation die mit einer Behälterkommissionierung gewonnenen Erfahrungen auf eine Stückkommissionierung angewandt werden können, was in einer Reduktion der Lagerspiele bei gleichbleibender Leistung (Verpackungseinheiten/h) resultiert. Da Verpackungseinheiten nicht einzeln sondern in Palettenlagen auf Tablaren gelagert werden (z.B. 10 Verpackungseinheiten auf einem einzigen Tablar), ist eine Reduktion der Lagerspiele möglich (anstatt 10 Einzeltablare aus dem Tablarlager zu holen, wird nun lediglich ein "Großtablar" aus dem Tablarlager geholt). Eine Reduktion der Lagerspiele erlaubt eine Reduktion der Anzahl von einzusetzenden Lagermaschinen.

Die Reduktion der Anzahl der Lagermaschinen wiederum äußert sich in einer Verringerung der Anschaffungskosten. Eine herkömmliche Kommissionieranlage kann bis zu 30 Millionen Euro kosten. Eine hinsichtlich der Leistung vergleichbare Kommissionieranlage, die gemäß der vorliegenden Erfindung betrieben wird, kostet z.B. lediglich 15 bis 18 Millionen Euro.

Ein weiterer Vorteil ist im geringeren Koordinationsaufwand zu sehen. Um im Bild des obigen Beispiels zu bleiben, war es im Stand der Technik erforderlich, die Lagermaschine zehn Mal zu verfahren (10 Lagerspiele). Gemäß der vorliegenden Erfindung wird die Lagermaschine lediglich ein einziges Mal ins Tablarlager geschickt, um ein einziges Tablar mit einer Palettenlage von z.B. 10 Verpackungseinheiten zu holen. Dabei ist zu beachten, dass sich der Planungsaufwand hinsichtlich einer Sequenzierung reduziert bzw. entfällt. Eine Sequenzierung ist erforderlich, um mehrere angeforderte Artikel zum richtigen Zeitpunkt am richtigen Ort bereitstellen zu können. Werden im Stand der Technik zehn Verpackungseinheiten eines einzigen Artikeltyps angefordert, so kann es zu erheblichen Problemen beim zeitlichen Synchronisieren (Sequenzieren) kommen. Gemäß der vorliegenden Erfindung ist es lediglich erforderlich, ein einziges Tablar aus dem Tablarlager zu holen, so dass diese Sequenzierungs- bzw. Synchronisierungsprobleme entfallen.

Erfindungsgemäß wird das Tablar nach der Entnahme der Verpackungseinheiten, sollten nicht alle Verpackungseinheiten der auf dem Tablar ursprünglich gelagerten Palettenlage entnommen worden sein, entweder in das Tablarlager zurückgelagert oder in einzelne Verpackungseinheiten aufgelöst, die vorzugsweise auf entsprechende Einzeltablare umgeladen und anschließend in ein separates Einzeltablarlager verbracht werden.

Durch das Zurücklagern von Tablaren, deren Verpackungseinheiten nicht vollständig während eines Kommissioniervorgangs entnommen wurden, wird das Behälterkommissionierungskonzept umgesetzt. Hier kommt der Gedanke zum Ausdruck, ein Tablar wie einen Behälter - und nicht wie eine einzelne Verpackungseinheit - zu behandeln. Dies reduziert die Anzahl der Lagerspiele erheblich.

Alternativ zum Zurücklagern eines Tablars, welches beispielsweise nur noch mit einer einzigen (restlichen) Verpackungseinheit von z.B. ursprünglich zehn Verpackungseinheiten beladen ist, kann diese einzelne Verpackungseinheit auf ein (kleineres) Einzeltablar umgeladen und in ein (separates) Einzeltablarlager verbracht werden. Durch diese Maßnahme vergrößert sich die Kapazität im (Groß-)Tablarlager. Die einzelnen Verpackungseinheiten, die dann im Einzeltablarlager gelagert sind, können zum Abarbeiten von solchen Kommissionieraufträgen verwendet werden, die zu ihrer Vervollständigung beispielsweise nur eine einzige Verpackungseinheit benötigen. Auf diese Weise kann die Anzahl der Lagerspiele im (Groß-)Tablarlager durch ein zusätzliches Lagerspiel im Einzeltablarlager reduziert werden. Da die hauptsächliche Kommissionierleistung jedoch im Tablarlager erzielt wird, ist dieses zusätzliche Lagerspiel im Einzeltablarlager akzeptabel. Es erhöht sogar die Leistung des (Groß-)Tablarlagers, da der Rücklagerungsvorgang entfällt.

Insbesondere werden in dem Tablarlager ausschließlich Tablare gelagert, die jeweils mit einer, insbesondere einer einzigen, Palettenlage beladen sind.

Eine Palettenlage kann auf einfache Weise schichtweise depalettiert werden.

Die Depalettierung erfolgt vorzugsweise sortenrein.

Es ist besonders von Vorteil, wenn mehrere Kommissionieraufträge derart zu einer so genannten "Batch" (Begriff wird nachfolgend noch ausführlicher erläutert werden) zusammengefasst werden, dass vorzugsweise alle, jedoch möglichst viele Verpackungseinheiten, die als Palettenlage auf Tablare geladen sind, an der Packstation von dem Tablar entnommen werden, so dass das Tablar nach der Entnahme vorzugsweise leer ist.

Ein leeres Tablar muss nicht mehr in das Tablarlager rückgelagert werden, wie zuvor oben ausgeführt. Die Anzahl der Lagerspiele wird reduziert. Ein Leertablar kann direkt zur Depalettierungseinrichtung verbracht werden.

Die Zusammenfassung von mehreren Kommissionieraufträgen nach gleichen Artikeltypen verringert ebenfalls die Anzahl der Lagerspiele im Tablarlager. Zwei Kommissionieraufträge, die den gleichen Artikeltyp mit unterschiedlicher Anzahl aufweisen, werden vorübergehend - zumindest was die Arbeit der Lagermaschine im Tablarlager betrifft - zu einem einzigen Kommissionierauftrag fusioniert (Batch-Bildung). Somit reduziert sich die Anzahl der Lagerspiele von zwei auf eins. Dies wiederum erhöht die Dynamik und verringert die Planungskomplexität. Vorzugsweise werden alle Verpackungseinheiten eines bestimmten Artikeltyps für z.B. einen ganzen Tag zusammengefasst, was die Anzahl der zur Abarbeitung der Kommissionieraufträge erforderlichen Lagerspiele erheblich reduziert.

Insbesondere erfolgt die Zusammenfassung zu einer Batch nach Artikeltypgruppen (Crash-Klassen, Familiengruppen). So kann vermieden werden, dass Joghurtbecher (zerbrechlich) mit Bierkisten (robust) gepackt werden.

Gemäß einer weiteren Ausgestaltung umfasst der Schritt des Verbringens der Tablare in das Tablarlager folgende Schritte: Transportieren des mit der Palettenlage beladenen Tablars in das Tablarlager; und Einlagern des Tablars in einen Stellplatz des Tablarlagers.

Der Schritt des Abrufens des Tablars zur Packstation umfasst vorzugsweise ein Auslagern des Tablars aus dem Tablarlager und ein Transportieren des ausgelagerten Tablars zu der Packstation, insbesondere mittels einer Fördertechnik.

Gemäß einer weiteren bevorzugten Ausführungsform wird der Schritt des Einlagems der Paletten so oft wiederholt, bis alle Artikeltypen eines Sortiments in ausreichender Anzahl auf Palette im Hochregal bevorratet sind, um die Kommissionieranlage mehrere Tage ohne erneute Paletteneinlagerung (Wareneingang) betreiben zu können.

Besonders bevorzugt wird jedoch eine vollständige Auflösung von Paletten auf Tablare. Der Kommissionierbestand befindet sich dann im Tablarlager. Der Wareneingang im Hochregallager wird wie bekannt gehandhabt. Regalbediengeräte des Hochregallagers bewegen also nur ganz volle oder leere Paletten in das Lager und aus ihm heraus. Wenn der Kommissionierbestand im Tablarlager gepuffert ist, kann das Hochregallager (bei gleicher Leistung) "langsamer" werden. Die Dynamik wird dann vom Hochregallager ins Tablarlager verlagert. Es werden aber insgesamt weniger Maschinen als im Stand der Technik benötigt. Das Hochregallager wird gemäß der vorliegenden Erfindung als Lager benutzt, dessen Bestand unter Anderem durch Abverkäufe/Umschlag und Lieferzyklen bestimmt ist. Das Tablarlager dient als Kommissionierpuffer mit einer kurzen "Reichweite" von 2-3 Tagen, was - im Falle einer Aufstockung eines bestehenden Lagers - auf die Leistungsfähigkeit eines bestehenden Hochregallagers abgestimmt werden kann.

Ferner kann das Hochregallager bei kurzen Lieferzyklen (d.h. bei geringen Beständen), bei direkter Ankopplung an eine eigene Produktion oder bei Betrieb als Umschlagsplatz komplett entfallen.

Auf diese Weise ist gewährleistet, dass das System mehrere Tage autark arbeiten kann. Das Kommissioniersystem ist somit über einen längeren Zeitraum vom Wareneingang unabhängig.

Ferner ist es von Vorteil, wenn der Schritt des schichtweisen Depalettierens folgende Schritte umfasst: Transportieren einer Palette aus dem Hochregallager zu einer Depalettierungseinrichtung, vorzugsweise mittels eines Regalbediengeräts; Entnehmen einer, vorzugsweise vollständigen, Palettenlage von der Palette; und Absetzen der entnommenen Palettenlage auf das entsprechend dimensionierte Tablar.

Diese Schritte können entweder maschinell oder manuell ausgeführt werden. Die maschinelle Ausführung erhöht wiederum den Automatisierungsgrad.

Ferner ist es von Vorteil, wenn jeweils nur eine einzige Palettenlage, wenn ein Artikeltyp, der für eine Vervollständigung eines Kommissionierauftrags benötigt wird, nicht in einer vorbestimmten Anzahl von Verpackungseinheiten im Tablarlager vorhanden ist, entnommen und abgesetzt wird und jeweils nur ein einziges Tablar in das Tablarlager verbracht wird, bis die vorbestimmte Anzahl im Tablarlager erreicht ist. Insbesondere bei C-Artikel kann dies von Vorteil sein.

Durch diese Maßnahme ist gewährleistet, dass die räumliche Abmessung des Tablarlagers äußerst klein gehalten werden kann. Das Tablarlager wird zwar als Puffer benutzt. Der größere Puffer des Systems ist jedoch im Hochregallager zu sehen. Vorzugsweise erfüllen beide Lager eine gleichwertige Pufferfunktion. Dies erhöht wiederum die Dynamik und Flexibilität im Bereich des Tablarlagers.

Paletten aus dem Hochregallager müssen nicht mehr, wie im Stand der Technik üblich, vollständig aufgelöst, d.h. depalettiert, werden. So ist es z.B. möglich, dass eine Palette, die mit fünf Palettenlagen beladen ist, lediglich um zwei oder drei Palettenlagen reduziert und anschließend die Palette mit drei bzw. zwei Palettenlagen in das Hochregallager zurückgelagert wird.

Dazu ist es ferner von Vorteil, wenn die Palette, von der eine, mehrere oder alle Palettenlagen entnommen wurden, in das Hochregallager zurückgelagert wird, wenn die vorbestimmte Anzahl von Verpackungseinheiten im Tablarlager erreicht ist.

Gemäß einer weiteren Ausgestaltung werden vollständig beladene Paletten, die einen Artikeltyp tragen, der überdurchschnittlich häufig in Kommissionieraufträgen vertreten ist (Schnellläufer), aus dem Hochregallager ausgelagert und in einem Schnellläuferbereich bereitgestellt.

Durch diese Maßnahme kann das Tablarlager beim Kommissionieren umgangen werden. Verpackungseinheiten müssen also nicht zwingend in das Tablarlager verbracht werden, sondern können direkt von der Palette kommissioniert werden, die im Schnellläuferbereich gelagert wird. Auf diese Weise reduziert sich die Anzahl der Lagerspiele im Tablarlager.

Gemäß einer weiteren Ausgestaltung umfasst der Schritt des schichtweisen Depalettierens ein manuelles Umsetzen von Palettenlagen auf Tablare, die aus Verpackungseinheiten eines Artikeltyps bestehen, der maschinell nicht umgesetzt werden kann.

Es gibt Artikeltypen, deren äußere Verpackung z.B. stark bruchgefährdet ist. Ein maschinelles Depalettieren solcher Artikeltypen ist nicht möglich, da die Verpackungseinheiten beim automatisierten Depalettieren beschädigt werden könnten. Dieser Artikeltyp wird in Fachkreisen auch als "ugly" oder "non-conveyable" bezeichnet. Gemäß dem erfindungsgemäßen Verfahren ist die Handhabung solcher schwer handhabbarer Verpackungseinheiten ("cases") nichtsdestotrotz möglich.

Gemäß einer weiteren Ausführungsform werden die Tablare während des Schritts des Abrufens zur Packstation sortiert.

So ist es möglich, dass abgerufene Tablare in einer vorgegebenen Reihenfolge (sequenziert) an der vorzugsweise entfernt gelegenen Packstation ankommen.

Ferner ist es von Vorzug, wenn mehrere Kommissionieraufträge parallel abgearbeitet werden.

Diese Maßnahme erhöht wiederum die Gesamtleistung durch Reduktion der Leistungsanforderungen an das Lager. Bei gleichem Durchsatz kann das Lager "langsamer" gefahren werden, d.h. es ist weniger aufwändig eine konstant bleibende Anzahl von Artikeln zu bewegen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische perspektivische Ansicht auf eine Kommissionier- anlage, die zum Durchführen des erfindungsgemäßen Verfahrens ge- eignet ist;
- Fig. 2: eine schematische perspektivische Ansicht auf eine weitere Ausfüh- rungsform einer Kommissionieranlage, die zum Durchführen des erfin- dungsgemäßen Verfahrens geeignet ist;
- Fig. 3: eine schematische perspektivische Ansicht einer De- palettierungseinrichtung;
- Fig. 4: ein Flussdiagramm gemäß dem Verfahren der vorliegenden Erfindung;
- Fig. 5: ein Blockdiagramm einer Kommissionieranlage zum Durchführen des erfindungsgemäßen Verfahrens;
- Fig. 6: ein vergleichendes Flussdiagramm, bei dem das Verfahren der Erfin- dung dem Stand der Technik in Zahlen gegenübergestellt wird;
- Fig. 7: ein Blockdiagramm eines weiteren Kommissioniersystems, das zur Durchführung des erfindungsgemäßen Verfahrens geeignet ist; und
- Fig. 8: ein Blockdiagramm, inklusive Arbeitsflüssen von Ladehilfsmitteln.

In der nachfolgenden Figurenbeschreibung werden gleiche Elemente mit den gleichen Bezugsziffern bezeichnet werden.

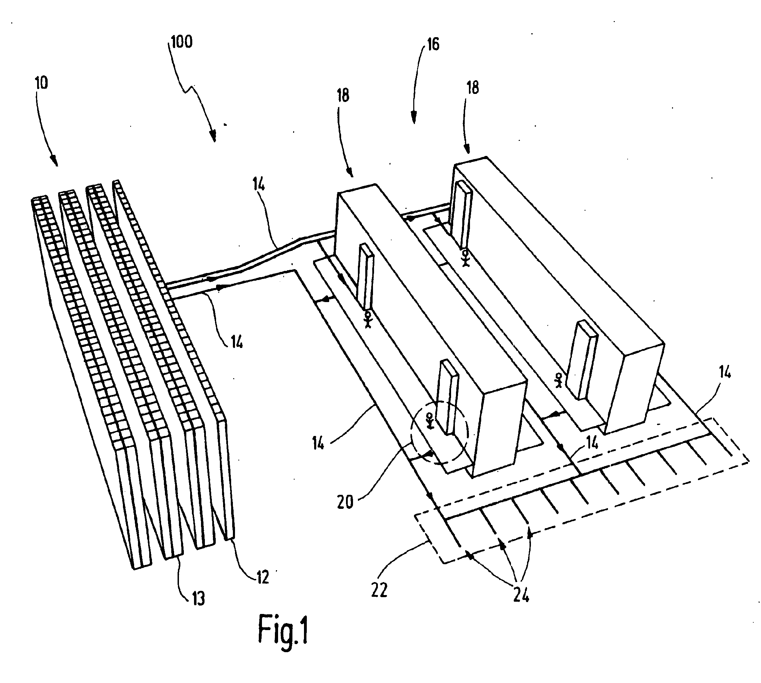

In Fig. 1 ist ein Ausführungsbeispiel einer Kommissionieranlage allgemein mit dem Bezugszeichen 100 bezeichnet.

Die Kommissionieranlage 100 umfasst ein Hochregallager 10, eine Vielzahl von Fördertechniken 14, ein Tablarlager 16, Packstationen 20 und einen Versandbereich 22 mit Versandstationen 24.

Das Hochregallager 10 kann aus mehreren Einfachregalen 12 und Doppelregalen 13 aufgebaut sein. Das Hochregallager 10 ist zur Aufnahme von Ladehilfsmitteln, wie z.B. Paletten, Tablaren, Behältern etc., geeignet. Bei der vorliegenden Erfindung werden vorzugsweise Paletten über einen (nicht dargestellten) Wareneingang in die Regale 12, 13 eingelagert. Als Paletten können verwendet werden: Chep (400 x 600 mm), Düsseldorfer Paletten (600 x 800 mm), Europaletten (800 x 1.200 mm), Industriepaletten (100 x 1.200 mm), GMA-Paletten (1.200 x 1.200 mm), Rollcontainer (720 x 815 mm), etc. Wie es nachfolgend noch ausführlicher erläutert werden wird, werden diese Wareneingangs-Paletten schichtweise, d.h. nach Palettenlagen, auf (Groß-) Tablare depalettiert. Die entsprechenden Tablare weisen dementsprechend angepasste Abmessungen auf (500 x 700 mm; 700 x 900 mm; 900 x 1.300 mm; 1.100 x 1.300 mm; 1.300 x 1.300 mm; 800 x 900 mm).

Das Hochregallager 10 ist so dimensioniert, dass es vorzugsweise ausreichend Artikel puffern kann, um mehrere Tage oder Wochen problemlos aus dem Hochregallager 10 kommissionieren zu können, ohne dass (täglich) neue Artikel am Wareneingang angeliefert werden müssen. Es versteht sich, dass das Hochregallager 10 auch von einem anderen Regallagertyp sein kann, der eine entsprechende Kapazität aufweist. In Hochregalen werden üblicherweise Regalbediengeräte (RBG) zum Einlagern und Auslagern der Wareneingangspaletten eingesetzt.

Mit Hilfe der RBGs (nicht dargestellt) werden die Paletten aus dem Hochregallager 10 zu einer hier nicht dargestellten Depalettierungseinrichtung verbracht, um durch diese vorzugsweise schichtweise (im Sinne von Palettenlage) depalettiert zu werden, und zwar auf entsprechend dimensionierte Tablare, wie oben ausgeführt. Die Tablare werden insbesondere mittels Fördertechniken 14, wie z.B. motorgetriebenen Rollenbahnen, Bandförderern etc., zum Tablarlager 16 transportiert, wo sie in einem von hier zwei Regalblöcken 18 in Stellplätze (nicht dargestellt) eingelagert werden. Die Ein- und Auslagerung kann über seitliche, vertikal angeordnete Lifte erfolgen, die an Längsseiten der Regalblöcke 18 angeordnet sind, wie in Fig. 1 dargestellt.

Die in Fig. 1 dargestellten Regalblöcke 18 weisen beispielsweise jeweils vier Einzelregale auf, von denen die beiden mittig angeordneten Regale Rücken an Rücken stehen. Jedes Regal ist in vertikaler Richtung in mehrere Ebenen unterteilt. Zwei gegenüberliegende Regale werden jeweils mit einer im Wesentlichen horizontal verfahrbaren Lagermaschine in horizontaler und vertikaler Richtung bedient. Die Lagermaschinen sind also sowohl horizontal als auch vertikal (simultan) verfahrbar und zur Ein- und Auslagerung von Tablaren geeignet, die vorzugsweise jeweils mit einer vollständigen Palettenlage beladen sind. Dazu sind vorzugsweise mehrere Lastaufnahmemittel (nebeneinander und/oder übereinander) pro Lagermaschine vorgesehen.

In dem exemplarischen Kommissioniersystem 100 der Fig. 1 dienen die seitlichen vertikalen Lifte auch gleichzeitig als Packstationen 20. Die Packstation 20 ist in das Regal integriert und vorzugsweise auf einem Niveau angeordnet, das zumindest um eine Regalebene oberhalb des Anlagenbodens liegt.

Am integrierten Packplatz 20 werden Verpackungseinheiten von dargebotenen Tablaren entnommen. Die Entnahme erfolgt je nach Vorgabe eines zugehörigen Kommissionierauftrags. Bei den Versandträgem, auf die die entnommenen Verpackungseinheiten gepackt werden, handelt es sich vorzugsweise ebenfalls um Paletten, insbesondere um den Typ von Palette, der auch im Hochregallager 10 verwendet wird. Der Versandträger wird über eine Hubeinrichtung (nicht dargestellt) auf das Niveau des integrierten Packplatzes 20 angehoben und anschließend bevorzugt schichtweise abgesenkt, sobald eine Schicht mit Verpackungseinheiten bepackt ist. Ist der Versandträger vollständig gepackt, kann er über eine Fördertechnik 14 in den Versandbereich 22 befördert werden. Der Versandbereich 22 weist hier eine Vielzahl von Versandstationen 24 auf. An den Versandstationen 24 können die fertig bepackten Versandträger beispielsweise in Lkws verladen und zum Auftraggeber gefahren werden.

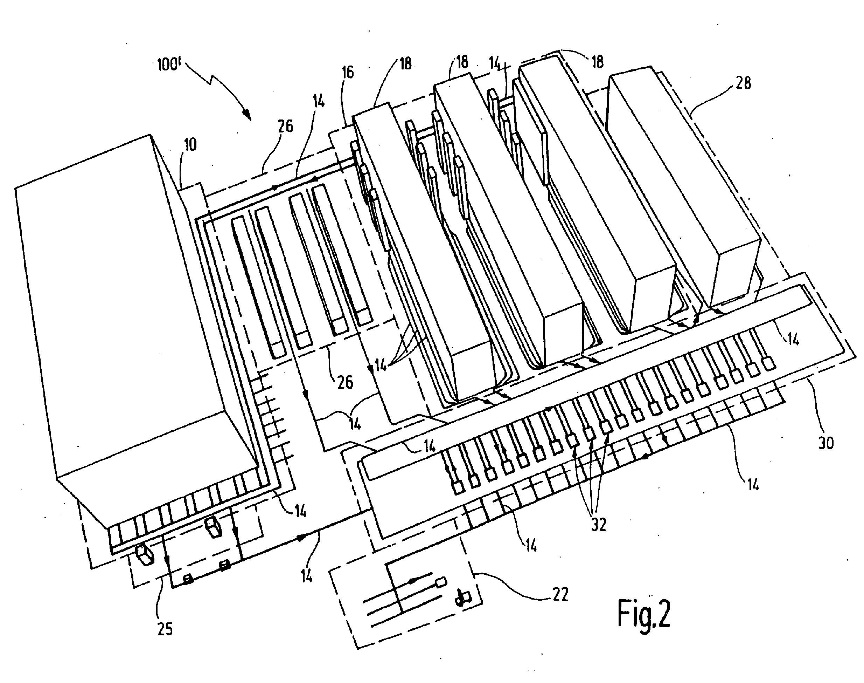

Fig. 2 zeigt eine weitere Kommissionieranlage 100', die ganz ähnlich zu der Kommissionieranlage 100 der Fig. 1 aufgebaut ist.

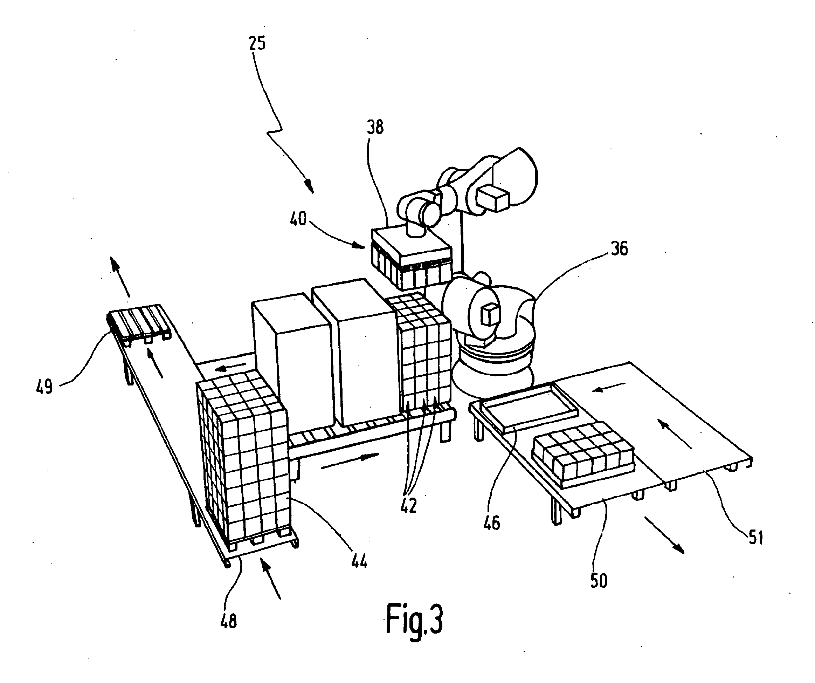

An einer der Stirnseiten des Hochregallagers 10 ist hier ein Depalettierungsbereich 25 mit zwei Depalettierungseinrichtungen (vgl. auch Fig. 3) dargestellt. Die Anzahl der Depalettierungseinrichtungen ist frei wählbar.

Zwischen dem Hochregallager 10 und dem Tablarlager 16 ist hier zusätzlich ein so genannter Schnellläuferbereich 26 angeordnet. Unter einem Schnellläufer wird nachfolgend ein Artikeltyp verstanden werden, der, statistisch gesehen, sehr häufig in Kommissionieraufträgen auftritt. Im Schnellläuferbereich 26 werden vorzugsweise vollständig beladene Paletten aus dem Hochregallager 10 gelagert. Durch den Schnellläuferbereich 26 verlaufend ist eine Fördertechnik zum Transportieren von zu kommissionierenden Artikeln angeordnet.

Weiterhin ist, am rechten Rand der Fig. 2, ein Einzeltablarlager 28 angrenzend an das Tablarlager 16 angeordnet. Das Tablarlager 28 dient zur Lagerung von so genannten Einzeltablaren. Ein Einzeltablar ist ein Tablar, das derart dimensioniert ist, dass es lediglich eine einzige Verpackungseinheit aufnehmen kann. Bei besonders kleinen Verpackungseinheiten können auch mehrere Verpackungseinheiten aufgenommen werden. Die Funktionsweise des Einzeltablarlagers 28 sowie die Gründe für dessen (zusätzliche) Bereitstellung werden nachfolgend detaillierter erläutert werden.

Die Kommissionieranlage 100' der Fig. 2 weist ferner einen Packbereich 30 mit einer Vielzahl von Packstationen 32 auf. Die Packstationen 32 ersetzen die in dem Kommissioniersystem 100 der Fig. 1 gezeigten, in das Regal integrierten Packplätze 20. Deshalb sind die vertikalen seitlichen Lifte der Regalblöcke des Tablarlagers 16 hier ebenfalls über die Fördertechnik 14 mit dem Packbereich 30 verbunden. Vorzugsweise ist im Packbereich 30 eine Fördertechnikschlaufe angeordnet, mit der die aus dem Tablarlager 16 ausgelagerten Tablare auf ihrem Weg zu den Packstationen 32 sortiert werden können.

Auch hier sind die Packstationen 32 auf zwei Ebenen angeordnet, so dass während des Packens ein Versandträger auf ein Versandniveau abgesenkt werden kann, um anschließend zu dem Versandbereich 22 transportiert zu werden.

Bezug nehmend auf Fig. 3 ist ein exemplarischer Depalettierungsbereich 25 mit einem Roboter 36 zum schichtweisen Depalettieren gezeigt.

Der Roboter 36 weist einen Sauggreifmechanismus 38 auf, der mittels Vakuum vollständige Palettenlagen 40 aus Verpackungseinheiten 42 greifen und umsetzen kann.

Dazu werden vorzugsweise vollständig beladene Paletten 44 zum Roboter 36 (aus dem hier nicht dargestellten Hochregallager) transportiert. Der Roboter 36 setzt die Palettenlage 40 auf leere Tablare 46 um, die zur Aufnahme einer vollständigen Palettenlage 40 geeignet sind.

Der Transport der verschiedenen Ladehilfsmittel erfolgt hier mittels Fördertechnik 48-51 (vgl. Bezugszeichen 14 in Fig. 1 und 2). Teilweise oder vollständig beladene Paletten 44 aus dem Hochregallager 10 (hier nicht dargestellt) werden mittels einer Palettenfördertechnik 48 zum Roboter 36 transportiert. Leere Paletten werden mittels einer Fördertechnik 49 vom Roboter 36 weg transportiert, vorzugsweise zu den Packstationen (vgl. Fig. 1 sowie Fig. 2). Teilweise depalettierte Paletten können in das Hochregallager zurückgelagert werden. Die leeren Tablare 46 werden mit einer Fördertechnik 51 zum Roboter 36 hin transportiert. Volle, mit einer Palettenlage beladene Tablare werden mit einer Fördertechnik 50 ins Tablarlager 16 transportiert.

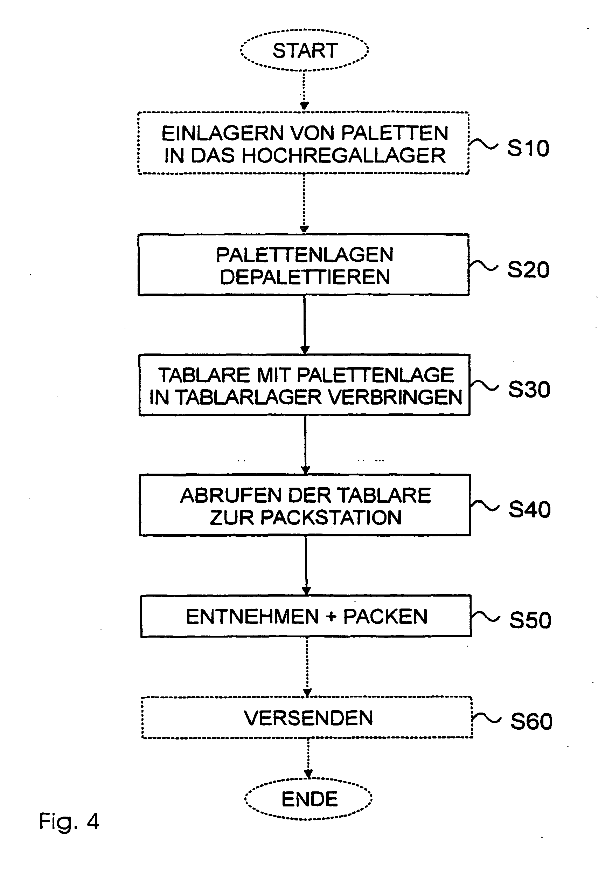

Bezug nehmend auf Fig. 4 wird nachfolgend das Verfahren zum Betreiben einer Kommissionieranlage, wie sie z.B. durch eine der in den Fig. 1 und 2 dargestellten Kommissionieranlagen repräsentiert wird, aufgezeigt werden.

In einem ersten Schritt S10 können vorzugsweise vollständig beladene Paletten in das Hochregallager 10 eingelagert werden. Es werden insbesondere so viele Paletten eingelagert, dass von jedem Artikeltyp eine ausreichende Anzahl von Verpackungseinheiten im Hochregallager 10 bevorratet ist, um z.B. mehrere Tage oder Wochen autark (im Tablarlager) arbeiten zu können. Eine Wareneingangspalette kann aber auch direkt aufgelöst werden, so dass eine Einlagerung ins Hochregallager vermieden werden kann.

In einem Schritt S20 werden die Paletten (aus dem Hochregallager 10) zu einer Depalettierungseinrichtung (vgl. Fig. 3) transportiert, um schichtweise depalettiert zu werden. Unter schichtweisem Depalettieren wird nachfolgend das Umsetzen einer, insbesondere vollständigen, Palettenlage insbesondere auf ein Tablar verstanden werden.

Anschließend werden in einem Schritt S30 die Tablare in das Tablarlager 30 verbracht. Im Tablarlager 30 werden vorzugsweise ausschließlich solche Tablare - vom Hochregallager kommend - eingelagert, die mit einer vollständigen Palettenlage beladen sind. Rücklagerungen von einer Packstation zurück in das Tablarlager sind jedoch ebenfalls möglich, wie es nachfolgend noch ausführlicher erläutert werden wird. Insbesondere leer kommissionierte Tablare können erneut eingelagert werden.

In einem Schritt S50 werden Verpackungseinheiten von den Tablaren aus dem Tablarlager entnommen und bei einer Packstation gepackt, die entweder separat zum Tablarlager angeordnet (Fig. 2) oder in dieses integriert (Fig. 1) ist. Die Auslagerung aus dem Tablarlager zum Zwecke der Kommissionierung erfolgt wiederum durch die oben erwähnten Lagermaschinen, die zur Aufnahme und Abgabe von Tablaren mit Palettenmaß geeignet sind. Die Lagermaschinen greifen vorzugsweise an die Vorderseite der Tablare an und untergreifen die Tablare nicht, so dass hier beim Stellplatz wiederum Raum eingespart werden kann.

Es versteht sich, dass Tablare, die am Ort der Packstation vollständig kommissioniert wurden, d.h. leere Tablare, zur erneuten Beladung mit einer neuen Palettenlage zuerst in das Tablarlager zurückgelagert werden können, um anschließend zur Depalettierungseinrichtung verbracht zu werden.

In einem optionalen Schritt S60 werden - gemäß einem vollständig abgearbeiteten Kommissionierauftrag - beladene Versandträger, insbesondere Paletten, zum Auftraggeber versendet.

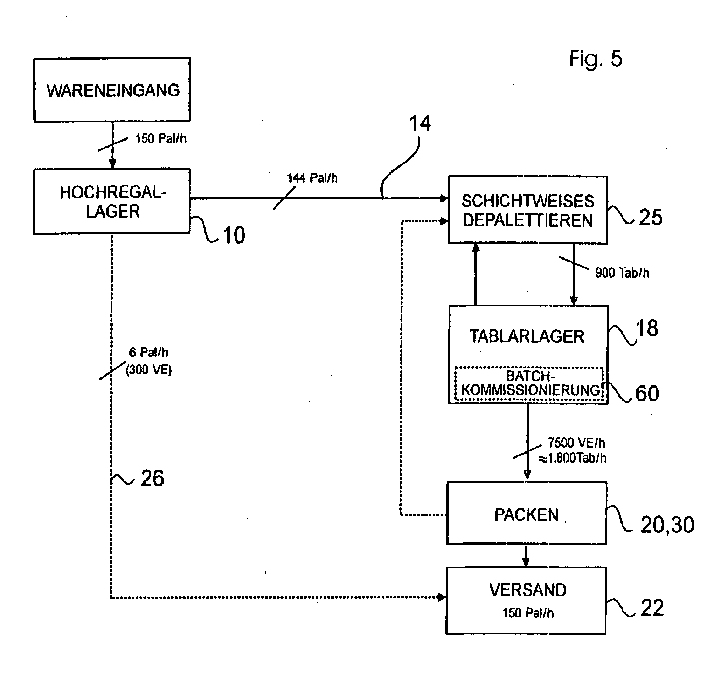

In Fig. 5 ist die Kommissionieranlage der Fig. 1 in Form eines Blockdiagramms dargestellt, wobei hier ganze Paletten direkt versandt werden können, wie es mit einer strichlierten Linie dargestellt ist. Die Pfeile zwischen den Blöcken stellen allgemein einen Transport von Ladehilfsmitteln zwischen den verschiedenen Elementen dar. Die Zahlenangaben bei Querstrichen geben die Leistung bzw. den Durchsatz von Paletten, Tablaren, Verpackungseinheiten (VE) und Ähnlichem an.

Bei dem in Fig. 5 gezeigten Beispiel werden exemplarisch 150 Paletten pro Stunde (Pal/h) in das Hochregallager 10 geliefert. Von diesen 150 Paletten werden 144 Paletten zur schichtweisen Depalettierung in den Depalettierungsbereich 25 gebracht. Dazu wird vorzugsweise die Fördertechnik 14 (vgl. Fig. 1 und 2) verwendet.

Alternativ werden im Beispiel der Fig. 5 sechs Pal/h, d.h. ca. 300 Verpackungseinheiten/h, direkt als Ganzpalette kommissioniert.

Geht man davon aus, dass eine Palette mit durchschnittlich sechs Palettenlagen beladen ist, so ergibt sich eine Depalettierungsrate von ca. 900 Tablaren pro Stunde (Tab/h). Diese 900 Tablare werden, vorzugsweise sortenrein, in das Tablarlager 16 eingelagert.

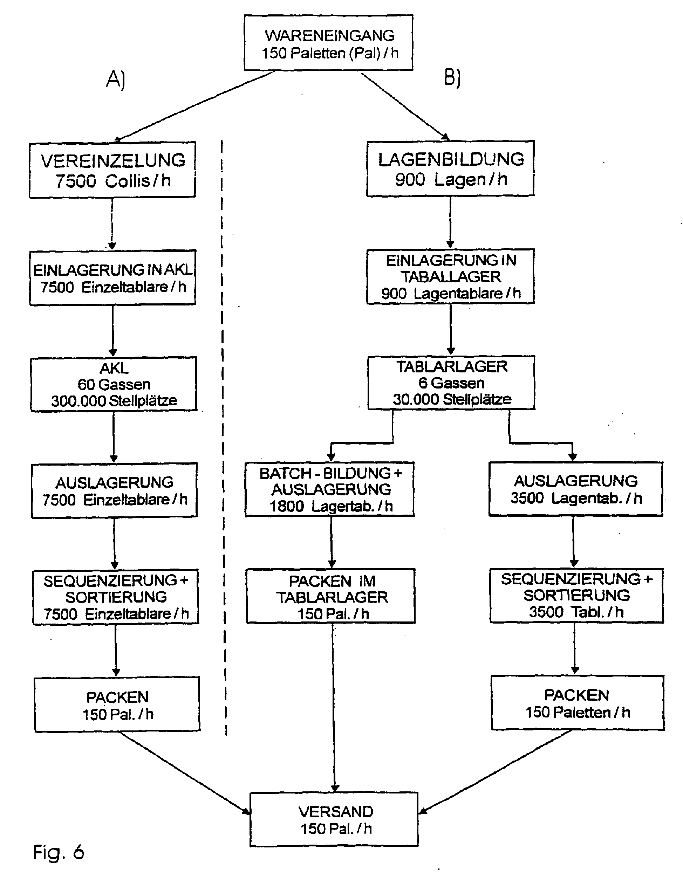

Im Tablarlager 16 werden die Tablare dann gemäß abzuarbeitenden Kommissionieraufträgen ausgelagert und zur Packstation transportiert, die entweder in das Tablarlager integriert ist oder separat angeordnet ist. Mittels einer Batch-Kommissionierung kann die Anzahl der Lagerspiele, die zum Auslagern der entsprechenden Tablare erforderlich ist, erheblich reduziert werden. Wie es nachfolgend im Zusammenhang mit Fig. 6 noch ausführlicher erläutert werden wird, wären nach dem Stand der Technik 7.500 Lagerspiele erforderlich, um 7.500 einzelne Verpackungseinheiten pro Stunde in und aus einem Tablarlager gemäß dem Stand der Technik auszulagern.

Gemäß der vorliegenden Erfindung werden jedoch vorzugsweise mehrere Kommissionieraufträge zu einer Batch zusammengefasst. Bei einer Batch werden mehrere Kommissionieraufträge zusammengefasst, die alle ein und denselben Artikeltyp betreffen. So wäre es z.B. denkbar, dass eine Filiale A z.B. sechs Verpackungseinheiten Milch ä 12 Einliter-Tüten anfordert und eine Filiale B z.B. vier Verpackungseinheiten ä 12 Einliter-Tüten benötigt. Diese beiden Aufträge werden zu einer Batch für den Artikeltyp "Einliter-Milchtüte" zusammengefasst. Ohne Batch-Bildung wären zwei Lagerspiele (zwei Auslagerungen) zur Abarbeitung beider Kommissionieraufträge (bzw. Auftragszeilen) erforderlich. Durch die Batch-Bildung jedoch ist nur ein einziges Lagerspiel (ein Auslagerungsvorgang) notwendig. Gemäß dem Stand der Technik wären sogar zehn Lagerspiele notwendig gewesen, da die Verpackungseinheiten auf zehn verschiedenen Einzeltablaren gelagert wären.

Eine Batch-Bildung ist mit Einzeltablaren nicht möglich. Deshalb lag es bisher für einen Fachmann fern, die im Bereich der Behälterkommissionierung angewandte Batch-Bildung auch in Tablarlagern zu praktizieren. Die Erfinder haben jedoch erkannt, dass die Transformation des Behälterkommissionierungskonzepts auf Tablarlager erstaunliche Vorteile hinsichtlich Dynamik, Platzbedarf und Investitionskosten erzielt. Diese Vorteile werden insbesondere im Zusammenhang mit der Fig. 6 noch deutlicher werden, wo die herkömmliche Vorgehensweise der erfindungsgemäßen Vorgehensweise anhand eines Beispiels dem Stand der Technik gegenübergestellt ist.

So zeigt Fig. 6 in seiner linken vertikal verlaufenden Hälfte, die mit A) überschrieben ist, die herkömmliche Vorgehensweise anhand von entsprechenden Zahlenbeispielen, wohingegen die rechte vertikale Hälfte, die mit B) überschrieben ist, die erfindungsgemäße Vorgehensweise anhand äquivalenter Zahlen verdeutlicht.

Dem Vergleich gemein ist der Wareneingang sowie der Warenausgang (Versand), die bei dem in Fig. 6 beschriebenen Beispiel auf 150 Pal/h festgelegt wurden.

Geht man davon aus, dass eine Palette mit durchschnittlich 50 Verpackungseinheiten in durchschnittlich sechs Palettenlagen beladen ist, so ergeben sich schon beim Schritt des Vereinzelns im Stand der Technik 7.500 Doppelspiele. Wie bereits oben erwähnt, wird unter einem Doppelspiel jegliche Art von Bewegung (Einschleusen, Ausschleusen, Umsetzen, usw.) einer Transporteinheit (Palette, Behälter, Tablar etc.) verstanden. Da die Verpackungseinheiten im Stand der Technik einzeln vereinzelt werden, werden also 7.500 Verpackungseinheiten auf 7.500 Tablare pro Stunde umgesetzt. Gemäß der vorliegenden Erfindung sind in der gleichen Zeit lediglich 900 Doppelspiele erforderlich, da ganze Palettenlagen auf Tablare umgesetzt werden, wobei die Tablare zur Aufnahme einer vollständigen Palettenlage ausgelegt sind.

Der sich im Stand der Technik an die Vereinzelung anschließende Schritt des Einlagerns in z.B. ein automatisiertes Kleinteillager ("AKL") erfordert im Stand der Technik wiederum 7.500 Einlagerungsspiele, wohingegen gemäß der Erfindung lediglich 900 Einlagerungsspiele zur Einlagerung in das Tablarlager notwendig sind.

Daraus ergibt sich, insbesondere unter der Vorgabe einer vollständigen Automatisierung, dass im Stand der Technik eine größere Anzahl von Lagermaschinen vonnöten ist, um in der gleichen Zeit die gleiche Anzahl von Verpackungseinheiten einzulagern. Wird das Kommissionierlager nach Art der vorliegenden Erfindung betrieben, reduziert sich die Anzahl der zur Einlagerung (und Auslagerung) der Verpackungseinheiten benötigten Lagermaschinen. Ein Käufer einer Kommissionieranlage, die gemäß dem erfindungsgemäßen Verfahren arbeitet, kann somit schneller den Punkt erreichen, an dem er seine Investitionskosten erwirtschaftet hat.

Dies äußert sich auch in den nächsten, zu vergleichenden Blöcken. Im Stand der Technik muss z.B. ein AKL mit 60 Gassen und 300.000 Stellplätzen verwendet werden, um den Kommissionierpuffer zu realisieren. Das AKL gemäß dem Stand der Technik muss dazu in der Lage sein, Verpackungseinheiten für einen längeren Zeitrahmen bevorratet zu halten. Deshalb ist eine Regalanordnung mit 60 Regalgassen vorzusehen. Dementsprechend viele Regale sind notwendig, um den für 300.000 Stellplätze erforderlichen Raum zu schaffen.

Die vorliegende Erfindung ermöglicht ein Tablarlager, das lediglich 30.000 Stellplätze und sechs Gassen aufweist. Hierbei ist zu beachten, dass die Stellplätze zwar größer dimensioniert sein müssen als im Stand der Technik, da ganze Palettenlagen auf die Tablare geladen sind. Dabei ist jedoch zu beachten, dass eine Palettenlage mit z.B. zehn Verpackungseinheiten viel dichter gepackt ist als zehn einzelne Verpackungseinheiten auf Einzeltablaren. Bei der vorliegenden Erfindung wird somit die Luft (zwischen den Einzeleinheiten) aus dem Lager gelassen. Gemäß der vorliegenden Erfindung wird eine höhere Dynamik im Bereich des Hochregallagers und Tablarlagers bereitgestellt. In diesem Zusammenhang wird insbesondere auf die unterschiedliche Anzahl von Spielen im Bereich der Depalettierung und Einlagerung in das Tablarlager verwiesen.

Im nächsten Vergleich wird der Packvorgang betrachtet werden.

Gemäß dem Stand der Technik sind wiederum 7.500 Bewegungen im Lager erforderlich, um 7.500 Verpackungseinheiten/h auszulagem. Aufgrund der großen Anzahl von Fördertechniken, die zum Auslagern verwendet werden, ist im Stand der Technik ferner eine Sortierung und Sequenzierung von 7.500 Einheiten/h unumgänglich.

Gemäß der vorliegenden Erfindung sind hier nun zwei Fälle zu berücksichtigen.

Die in Fig. 6B) links dargestellten letzten beiden Schritte zeigen die Auslagerung und das Packen mit Batch-Bildung, wohingegen der rechte Ast ein Auslagern und Packen ohne Batch-Bildung zeigt.

Ausgehend davon, dass die 7.500 pro Stunde zu kommissionierenden Verpackungseinheiten 3.500 Auftragszeilen entsprechen, können diese 3.500 Auftragszeilen durchschnittlich zu 1.800 Batches zusammengefasst werden. 1.800 Batches wiederum stellen 1.800 Auslagerungsspiele (Auslagerungen aus Tablarlager) dar. So werden ausreichend Verpackungseinheiten zum Packen von 150 Pal/h ausgelagert.

Ohne Batch-Bildung müssen bei 3.500 Auftragszeilen 3.500 Spiele stattfinden, was jedoch immer noch einen Faktor von ca. 2,14 gegenüber dem Stand der Technik bedeutet.

Also zeichnet sich das erfindungsgemäße Verfahren auch hier durch eine höhere Dynamik bei Einsatz von weniger Lager- und Fördertechnik aus.

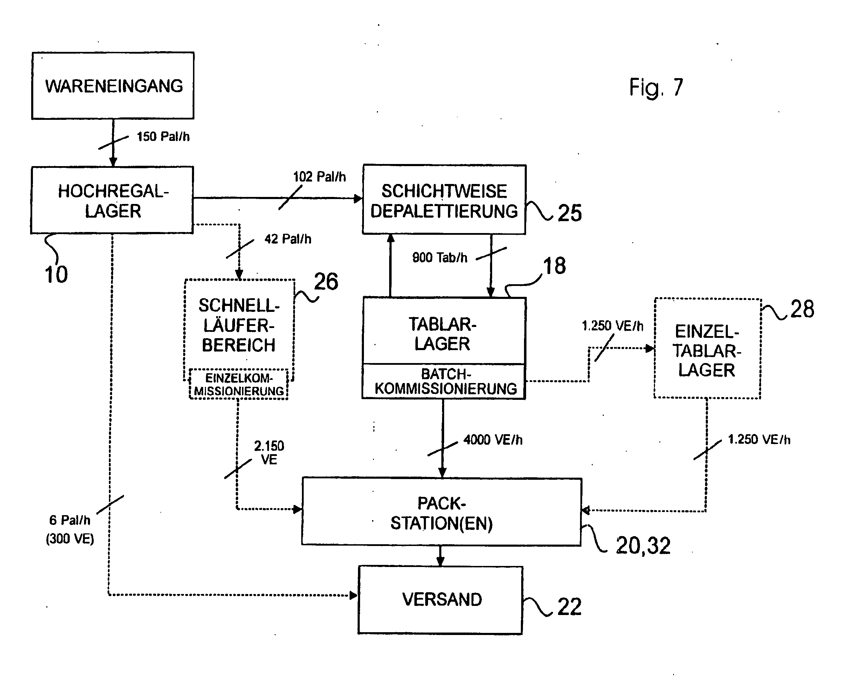

Bezug nehmend auf Fig. 7 ist eine Abwandlung der Fig. 5 dargestellt, die an sich bekannte Kommissionieranlagenelemente, wie den Schnellläuferbereich 26 (vgl. Fig. 2) und ein Einzeltablarlager 28 (vgl. Fig. 2) in das erfindungsgemäße Konzept integriert.

Auch hier ist der Fluss der Verpackungseinheiten zwischen den einzelnen Komponenten einer Kommissionieranlage gezeigt, die gemäß der vorliegenden Erfindung betrieben wird.

Von den 150 Pal/h werden 102 Paletten über das Tablarlager abgewickelt, 42 Paletten werden über den Schnellläuferbereich abgewickelt, und 6 Paletten werden direkt zum Versand transportiert, ohne weder das Tablarlager noch den Schnellläuferbereich zu passieren.

In Fig. 7 ist insbesondere der Warenfluss zwischen Tablarlager 18 und Einzeltablarlager 28 zu erkennen.

Verpackungseinheiten können z.B. vom Tablarlager 18 in das Einzeltablarlager 28 transferiert werden, wenn eine Rücklagerung eines Tablars, von dem kommissioniert wurde, aufgrund einer geringen Anzahl verbleibender Verpackungseinheiten weniger sinnvoll ist. Wenn z.B. jedes Tablar mit zehn Verpackungseinheiten beladen ist und neun Verpackungseinheiten zum Packen bzw. zum Abarbeiten eines Kommissionierauftrags bereits von dem Tablar entnommen wurden, kann eine übergeordnete Steuerung entscheiden, dass die hier eine restliche Verpackungseinheit auf ein Einzeltablar umgesetzt wird und auf dem Einzeltablar in das Einzeltablarlager 28 verbracht wird. Dadurch wird im Tablarlager 18 ein Stellplatz leer, der wiederum aus dem Hochregallager 10 über den Depalettierungsbereich 25 nachgefüllt werden kann.

Verpackungseinheiten, die sich auf Einzeltablaren im Einzeltablarlager 28 befinden, können zur Aufstockung und zum Abschließen von Kommissionieraufträgen an den Packstationen 20, 30 verwendet werden. So ist es z.B. denkbar, dass zur Vervollständigung eines Kommissionierauftrags lediglich eine einzige Verpackungseinheit vonnöten ist. Bevor ein voll beladenes Tablar aus dem Tablarlager 18 zur Packstation 20, 30 verbracht wird, um anschließend zurückgelagert zu werden, ist es sinnvoller, die einzelne Verpackungseinheit aus dem Einzeltablarlager 28 bereitzustellen. Diese Maßnahme erhöht wiederum die Dynamik, insbesondere im Bereich des Tablarlagers 18.

Ferner ergibt sich aus dem in Fig. 7 dargestellten Blockdiagramm eine vorteilhafte Modularität und Skalierbarkeit des erfindungsgemäßen Konzepts. Kommissionieranlagen, die gemäß dem erfindungsgemäßen Verfahren arbeiten, können um bekannte Kommissionieranlagenkomponenten aufgestockt und erweitert werden. Durch die bekannten Kommissionieranlagenelemente kann die Dimension der zur Durchführung des erfindungsgemäßen Verfahrens benötigten Kommissionieranlagenelemente frei gewählt werden. Dies vergrößert die Freiheit der Planer beim Konzeptionieren einer Kommissionieranlage.

Außerdem können bestehende Kommissionieranlagen entsprechend umgerüstet werden, um mit dem erfindungsgemäßen Verfahren betrieben zu werden.

Somit ist eine erhebliche Verringerung der Komplexizität in der Lagerverwaltung und Steuerung möglich. Die Lagerstruktur kann mit sich verändernden Prozessen und Anforderungen mitwachsen. Ein Lager kann jederzeit hinsichtlich Volumen, Anzahl der Artikel, Veränderung in der Auftragsstruktur und Leistung mitwachsen, ohne das Konzept zu verändern.

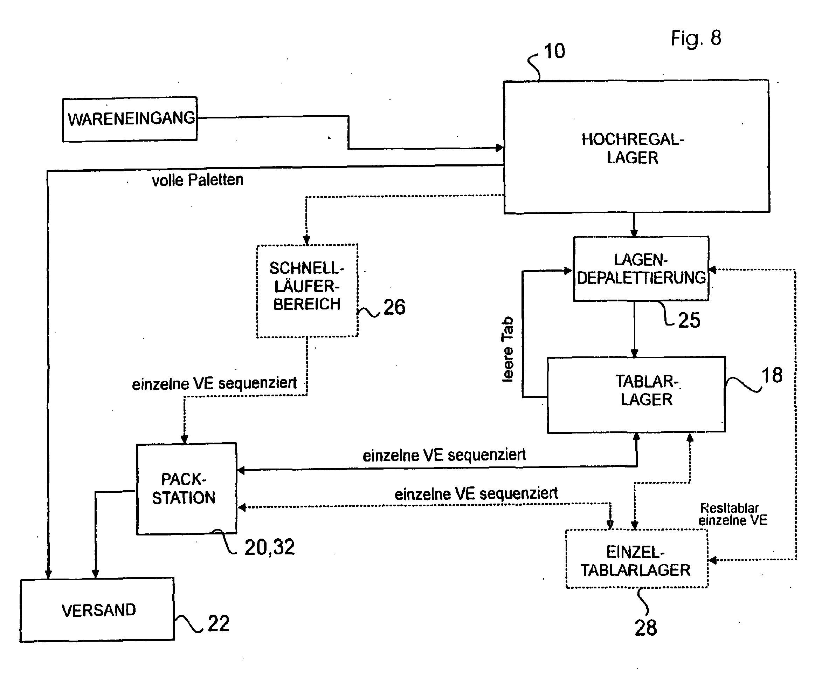

Bezug nehmend auf Fig. 8 ist eine bevorzugte Ausgestaltung des Ladehilfsmittelflusses (Paletten, Tablare) in einer Kommissionieranlage gezeigt, die mit dem erfindungsgemäßen Verfahren betrieben wird.

Vom Wareneingang werden voll beladene Paletten zum Hochregallager transportiert. Vom Hochregallager aus können volle Paletten in den Schnellläuferbereich transportiert werden. Sie können aber auch direkt zum Versand transportiert werden. Volle oder teilweise beladene Paletten werden an den Depalettierungsbereich 25 geliefert.

Der Depalettierungsbereich 25 kann neben der schichtweisen Depalettierung zur Einlagerung von mit jeweils einer Palettenlage beladenen Tablaren in das Tablarlager 18 optional auch einzeln vereinzeln. Einzelne Verpackungseinheiten können so auf Einzeltablaren in das optionale Einzeltablarlager 28 transportiert werden. Gleiches gilt für Restbestände aus dem Tablarlager 18. Leere Tablare aus dem Tablarlager 18 können (insbesondere über das Tablarlager) zurück zum Depalettierungsbereich 25 transportiert werden. Anderenfalls werden beladene Tablare aus dem Tablarlager 18 zur Packstation 20, 30 transportiert. Gleiches gilt für Einzeltablare vom Einzeltablarlager 28. Die Packstation 20, 30 kann auch z.B. mittels einer Fördertechnik mit Verpackungseinheiten aus dem Schnellläuferbereich (vgl. Fig. 2) beliefert werden, die vorzugsweise sequenziert auf der Fördertechnik angeordnet sind.

## Patentansprüche

1. Verfahren zum Betreiben einer Kommissionieranlage (100; 100'), wobei die Kommissionieranlage ein Hochregallager (10), mindestens ein Tablarlager (16), mindestens eine Packstation (20; 32) und mindestens eine Versandstation (22) aufweist, mit den folgenden Schritten:
a) schichtweises Depalettieren (S20) von Verpackungseinheiten (42), die eine, insbesondere vollständige, Palettenlage (40) bilden, von einer Palette (44), insbesondere einer Europalette, die jeweils eine Vielzahl von zu kommissionierenden Verpackungseinheiten (42) eines Artikeltyps trägt, herunter auf ein entsprechend dimensioniertes Tablar (46);
b) Verbringen (S30) des mit der Palettenlage (40) beladenen Tablars (46) in das Tablarlager (16), vorzugsweise mittels einer Fördertechnik (14), einer Lagermaschine und/oder eines Lifts;
c) Abrufen (S40) des mit der Palettenlage (40) beladenen Tablars (46) gemäß einem Kommissionierauftrag oder mehreren Kommissionieraufträgen zu der Packstation (20; 32);
d) Entnehmen einer, gemäß dem Kommissionierauftrag bzw. einem der Kommissionieraufträge, vorbestimmten Anzahl von zu kommissionierenden Verpackungseinheiten (42), und Packen der entnommenen Verpackungseinheiten (42) auf einen Versandträger, um den Versandträger bei Vervollständigung des Kommissionierauftrags an einen Auftraggeber zu versenden;
wobei das Tablar (46) nach der Entnahme der Verpackungseinheiten (42), sollten nicht alle Verpackungseinheiten der Palettenlage (40) entnommen worden sein, entweder ins Tablarlager (16) zurück gelagert wird oder in einzelne Verpackungseinheiten (42) aufgelöst wird, die auf entsprechende Einzeltablare umgeladen und anschließend in ein separates Einzeltablarlager (28) verbracht werden, um später bei einem anderen Kommissionierauftrag zu dessen Vervollständigung erneut zur Packstation (32) verbracht zu werden.

2. Verfahren nach Anspruch 1, mit dem weiteren Schritt: Einlagern von mindestens einer Palette in das Hochregallager, wobei die Verpackungseinheiten (42) in Form von mindestens einer Palettenlage (40) auf der Palette (44) aufgeschichtet sind.

3. Verfahren nach einem der Ansprüche 1 oder 2, wobei in das Tablarlager ausschließlich Tablare eingelagert werden, die jeweils mit einer Palettenlage (40) beladen sind.

4. Verfahren nach einem der Ansprüche 1 bis 3, wobei mehrere Kommissionieraufträge derart zu einer Batch zusammengefasst werden, dass alle Verpackungseinheiten (42), die als Palettenlage (40) auf das Tablar (46) geladen sind, an der Packstation (20; 32) von dem Tablar (46) entnommen werden, so dass das Tablar (46) nach der Entnahme leer ist.

5. Verfahren nach einem der Ansprüche 1 bis 4, wobei der Schritt b) umfasst:
- Transportieren des mit der Palettenlage (40) beladenen Tablars (46) in das Tablarlager (16); und
- Einlagern des Tablars (46), vorzugsweise mehrfachtief, in einen Stellplatz des Tablarlagers (16).

6. Verfahren nach einem der Ansprüche 1 bis 5, wobei der Schritt c) umfasst:
- Auslagern des Tablars (46) aus dem Tablarlager (16); und
- Transportieren des ausgelagerten Tablars (46) zu der Packstation (20, 32), vorzugsweise mittels einer Fördertechnik (14).

7. Verfahren nach Anspruch 2, wobei das Einlagern so oft wiederholt wird, bis alle Artikeltypen eines Sortiments in ausreichender Anzahl auf Paletten (44) im Hochregallager (10) bevorratet sind, um die Kommissionieranlage (100; 100') mehrere Tage oder Wochen ohne erneute Paletteneinlagerungen betreiben zu können.

8. Verfahren nach einem der Ansprüche 1 bis 7, wobei der Schritt a) umfasst:
- Transportieren einer Palette (44) aus dem Hochregallager (10) zu einer Depalettierungseinrichtung (36), vorzugsweise mittels eines Regalbediengeräts;
- Entnehmen einer Palettenlage (40) von der Palette (44); und
- Absetzen der entnommenen Palettenlage (40) auf das entsprechend dimensionierte Tablar (46).

9. Verfahren nach Anspruch 8, wobei, wenn ein Artikeltyp, der für eine Vervollständigung eines Kommissionierauftrags benötigt wird, nicht in einer vorbestimmten Anzahl von Verpackungseinheiten (42) im Tablarlager (16) vorhanden ist, jeweils nur eine Palettenlage (40) entnommen und abgesetzt wird und jeweils nur ein Tablar (46) in das Tablarlager (16) verbracht wird, bis die vorbestimmte Anzahl im Tablarlager (16) erreicht ist.

10. Verfahren nach Anspruch 9, wobei, wenn die vorbestimmte Anzahl im Tablarlager (16) erreicht ist, die Palette (44), von der eine oder mehrere Palettenlagen (40) entnommen wurden, in das Hochregallager (10) zurückgelagert wird, wenn die Palette (44) noch mindestens eine Palettenlage (40) von Verpackungseinheiten (42) trägt.

11. Verfahren nach einem der Ansprüche 1 bis 10, wobei vollständig beladene Paletten (44), die einen Artikeltyp tragen, der überdurchschnittlich häufig in Kommissionieraufträgen vertreten ist, aus dem Hochregallager (10) ausgelagert und in einem Schnellläuferbereich (26), der Teil der Kommissionieranlage (100) ist, bereitgestellt werden, um Verpackungseinheiten (42) unter Umgehung des Tablarlagers (16) auf einen Versandträger packen zu können.

12. Verfahren nach einem der Ansprüche 1 bis 11, wobei der Schritt a) umfasst:
- manuelles Umsetzen von Palettenlagen (40), die aus Verpackungseinheiten eines Artikeltyps bestehen, der maschinell nicht umgesetzt werden kann, auf Tablare (46).

13. Verfahren nach einem der Ansprüche 1 bis 12, wobei die Tablare (46) während des Schritts d) sortiert werden, um gemäß einer vorgegebenen Reihenfolge an der Packstation (32) anzukommen.

14. Verfahren nach einem der Ansprüche 1 bis 12, wobei mehrere Kommissionieraufträge parallel abgearbeitet werden.

15. Kommissionieranlage (100; 100') mit einem Hochregallager (10), mit einem Depalettierungsbereich (25), mindestens einem Tablarlager (16), mindestens einer Packstation (20; 32), mindestens einer Versandstation (22) und einer Steuerung, die angepasst ist, Befehle zum Durchführen der folgenden Schritte zu erzeugen:
a) schichtweises Depalettieren (S20) von Verpackungseinheiten (42), die eine, insbesondere vollständige, Palettenlage (40) bilden, von einer Palette (44), insbesondere einer Europalette, die jeweils eine Vielzahl von zu kommissionierenden Verpackungseinheiten (42) eines Artikeltyps trägt, herunter auf ein entsprechend dimensioniertes Tablar (46);
b) Verbringen (S30) des mit der Palettenlage (40) beladenen Tablars (46) in das Tablarlager (16), vorzugsweise mittels einer Fördertechnik (14), einer Lagermaschine und/oder eines Lifts;
c) Abrufen (S40) des mit der Palettenlage (40) beladenen Tablars (46) gemäß einem Kommissionierauftrag oder mehreren Kommissionieraufträgen zu der Packstation (20; 32);
d) Entnehmen einer, gemäß dem Kommissionierauftrag bzw. einem der Kommissionieraufträge, vorbestimmten Anzahl von zu kommissionierenden Verpackungseinheiten (42), und Packen der entnommenen Verpackungseinheiten (42) auf einen Versandträger, um den Versandträger bei Vervollständigung des Kommissionierauftrags an einen Auftraggeber zu versenden;
wobei das Tablar (46) nach der Entnahme der Verpackungseinheiten (42), sollten nicht alle Verpackungseinheiten der Palettenlage (40) entnommen worden sein, entweder ins Tablarlager (16) zurück gelagert wird oder in einzelne Verpackungseinheiten (42) aufgelöst wird, die auf entsprechende Einzeltablare umgeladen und anschließend in ein separates Einzeltablarlager (28) verbracht werden, um später bei einem anderen Kommissionierauftrag zu dessen Vervollständigung erneut zur Packstation (32) verbracht zu werden

## Claims

1. A method for operating an order-picking system (100; 100'), wherein the order-picking system comprises a high-bay warehouse (10), at least one tray warehouse (16), at least one packing station (20; 32), and at least one shipping station (22), the method comprising the steps of:
a) depalletizing (S20) in a layerwise manner packing units (42) forming a, particularly complete, pallet layer (40) from a pallet (44), particularly a Europool palette, which carries respectively a plurality of packing units (42), which are to be picked, of one type of article, onto a correspondingly dimensioned tray (46);
b) bringing (S30) the tray (46) loaded with the pallet layer (40) into the tray warehouse (16), preferably by means of a conveyor (14), a storage machine and/or a lift;
c) recalling (S40) the tray (46) loaded with the pallet layer (40) in accordance with an order-picking order or several order-picking orders to the packing station (20; 32);
d) removing, in accordance with the order-picking order or one of the order-picking orders, a predetermined number of packing units (42), which are to be picked, and packing the removed packing units onto a shipping support, in order to ship the shipping support to a customer, if the order-picking order is completed;
wherein the tray (46) is either stored back into the tray warehouse (16) or is disbanded into single packing units (42) after the removal of packing units (42), if not all packing units of the pallet layer (40) have been removed, the single packing units being transferred onto corresponding single trays and brought subsequently into a separate single-tray warehouse (28), in order to be brought again to the packing station (32) later for completing another order-picking order.

2. The method of claim 1, comprising the further step of:
storing of at least one pallet into the high-bay warehouse, wherein the packing units (42) are stacked on the pallet (44) in terms of at least one pallet layer (40).

3. The method of claim 1 or 2, wherein exclusively trays loaded respectively with one pallet layer (40) are stored into the tray warehouse.

4. The method of any of the claims 1 to 3, wherein several order-picking orders are combined to a batch so that all packing units (42) being loaded as a pallet layer (40) onto the tray (46) are removed from the tray (46) at the packing station (20; 32) so that the tray (46) is empty after the removal.

5. The method of any of the claims 1 to 4, wherein the step b) comprises:
- transporting the tray (46) loaded with the pallet layer (40) into the tray warehouse (16); and
- storing the tray (46) at a storing position of the tray warehouse (16), preferably several trays behind each other.

6. The method of any of the claims 1 to 5, wherein the step c) comprises:
- retrieving the tray (46) from the tray warehouse (16); and
- transporting the retrieved tray (46) to the packing station (20, 32), preferably by means of a conveyor (14).

7. The method of claim 2, wherein the storing is repeated that often until all types of article of an assortment are stocked in a sufficient number on pallets (44) in the high-bay warehouse (10), allowing operation of the order-picking system (100; 100') for several days or weeks without re-storing pallets.

8. The method of any of the claims 1 to 7, wherein the step a) comprises:
- transporting a pallet (44) from the high-bay warehouse (10) to a depalletizing device (36), preferably by means of a rack feeder;
- removing a pallet layer (40) from the pallet (44); and
- putting the retrieved pallet layer (40) onto the correspondingly dimensioned tray (46).

9. The method of claim 8, wherein, if a type of article needed for the completion of an order-picking order is not present in accordance with a predetermined number of packing units (42) in the tray warehouse (16), respectively only one pallet layer (40) is retrieved and disposed, and respectively only one tray (46) is transported into the tray warehouse (16) until the predetermined number is achieved in the tray warehouse (16).

10. The method of claim 9, wherein, if the predetermined number is achieved in the tray warehouse (16), the pallet (44), from which one or more pallet layers (40) are to be removed, is stored back into the high-bay warehouse (10), if the pallet (44) still carries at least one pallet layer (40) of packing units (42).

11. The method of any of the claims 1 to 10, wherein completely loaded pallets (44) carrying one type of article which is present in an overaverage manner in order-picking orders is retrieved from the high-bay warehouse (10) and provided in a fast-mover area (26), which is part of the order-picking system (100), in order to allow packing of packing units (42) onto a shipping support by bypassing the tray warehouse (16).

12. The method of any of the claims 1 to 11, wherein the step a) comprises:
- manually transferring pallet layers (40), consisting of packing units of one type of article which cannot be transferred in an automated manner, onto trays (46).

13. The method of any of the claims 1 to 12, wherein the trays (46) are sorted during the step d), in order to reach the packing station (32) in accordance with a predetermined sequence.

14. The method of any of the claims 1 to 12, wherein several order-picking orders are processed in a parallel manner.

15. An order-picking system (100; 100') comprising a high-bay warehouse (10), at least one tray warehouse (16), at least one packing station (20; 32), at least one shipping station (22), and a superordinated control being adapted to generate instructions for executing the following steps:
a) depalletizing (S20) in a layerwise manner packing units (42) forming a, particularly complete, pallet layer (40) from a pallet (44), particularly a Europool palette, which carries respectively a plurality of packing units (42), which are to be picked, of one type of article, onto a correspondingly dimensioned tray (46);
b) bringing (S30) the tray (46) loaded with the pallet layer (40) into the tray warehouse (16), preferably by means of a conveyor (14), a storage machine and/or a lift;
c) recalling (S40) the tray (46) loaded with the pallet layer (40) in accordance with an order-picking order or several order-picking orders to the packing station (20; 32);
d) removing, in accordance with the order-picking order or one of the order-picking orders, a predetermined number of packing units (42), which are to be picked, and packing the removed packing units onto a shipping support, in order to ship the shipping support to a customer, if the order-picking order is completed;
wherein the tray (46) is either stored back into the tray warehouse (16) or is disbanded into single packing units (42) after the removal of packing units (42), if not all packing units of the pallet layer (40) have been removed, the single packing units being transferred onto corresponding single trays and brought subsequently into a separate single-tray warehouse (28), in order to be brought again to the packing station (32) later for completing another order-picking order.

## Revendications

1. Procédé pour faire fonctionner une installation de préparation de commandes (100 ; 100'), l'installation de préparation de commandes présentant un rayonnage de magasinage haut (10), au moins un rayonnage à supports d'étagères (16), au moins un poste d'emballage (20 ; 32) et au moins un poste d'expédition (22), comprenant les étapes consistant à :
a) dépalettiser par strates (S20) des unités d'emballage (42), qui forment une couche de palette (40), en particulier complète, d'une palette (44), en particulier une europalette, qui porte à chaque fois une pluralité d'unités d'emballage (42) d'un type d'articles à préparer pour la commande, sur un support d'étagère (46) de dimensions correspondantes ;
b) amener (S30) le support d'étagère (46) chargé de la couche de palette (40) dans le rayonnage à supports d'étagères (16), de préférence au moyen d'une technique de transport (14), d'une machine de stockage et/ou d'un monte-charge ;
c) extraire (S40) le support d'étagère (46) chargé de la couche de palette (40) conformément à un ordre de commande ou à plusieurs ordres de commande, en direction du poste d'emballage (20 ; 32) ;
d) prélever un nombre prédéfini par l'ordre de commande ou par l'un des ordres de commande d'unités d'emballage (42) à préparer pour la commande, et emballer les unités d'emballage prélevées (42) sur un support d'expédition, afin d'envoyer le support d'expédition à un donneur d'ordres pour compléter la réalisation de l'ordre de commande;
le support d'étagère (46), après le retrait des unités d'emballage (42), au cas où les unités d'emballage de la couche de palette (40) ne devaient pas toutes être retirées, étant soit ramené dans le rayonnage à supports d'étagères (16), soit étant séparé en unités d'emballage individuelles (42), qui sont chargées à nouveau sur des supports d'étagères individuels correspondants et ensuite amenées à un rayonnage à supports d'étagères individuel séparé (28), pour ensuite être amenées à nouveau au poste d'emballage (32) en vue de réaliser un autre ordre de commande.

2. Procédé selon la revendication 1, comprenant en outre l'étape supplémentaire consistant à :
introduire au moins une palette dans le rayonnage de magasinage haut, les unités d'emballage (42) étant empilées sur la palette (44) sous la forme d'au moins une couche de palette (40).

3. Procédé selon la revendication 1 ou 2, dans lequel on introduit dans le rayonnage à supports d'étagères exclusivement des supports d'étagères qui sont chargés à chaque fois avec une couche de palette (40).

4. Procédé selon l'une quelconque des revendications 1 à 3, dans lequel plusieurs ordres de commande sont rassemblés en un lot, de telle sorte que toutes les unités d'emballage (42) qui sont chargées sur le support d'étagère (46) sous forme de couche de palette (40) soient prélevées du support d'étagère (46) au niveau du poste d'emballage (20 ; 32), de sorte que le support d'étagère (46) soit vide après leur retrait.

5. Procédé selon l'une quelconque des revendications 1 à 4, dans lequel l'étape b) comprend :
- le transport du support d'étagère (46) chargé avec la couche de palette (40) dans le rayonnage à supports d'étagères (16) ; et
- l'insertion du support d'étagère (46), de préférence sur plusieurs profondeurs, dans un emplacement du rayonnage à supports d'étagères (16).

6. Procédé selon l'une quelconque des revendications 1 à 5, dans lequel l'étape c) comprend :
- la sortie du support d'étagère (46) hors du rayonnage à supports d'étagères (16) ; et
- le transport du support d'étagère (46) sorti jusqu'au poste d'emballage (20, 32), de préférence au moyen d'une technique de transport (14).

7. Procédé selon la revendication 2, dans lequel l'insertion est répétée jusqu'à ce que tous les types d'articles d'un assortiment soient stockés en nombre suffisant sur des palettes (44) dans le rayonnage de magasinage haut (10), afin de pouvoir faire fonctionner l'installation de préparation de commandes (100 ; 100') pendant plusieurs jours ou semaines sans devoir à nouveau introduire des palettes.

8. Procédé selon l'une quelconque des revendications 1 à 7, dans lequel l'étape a) comprend :
- le transport d'une palette (44) hors du rayonnage de magasinage haut (10) jusqu'à un dispositif de dépalettisation (36), de préférence au moyen d'un appareil de commande de rayonnage ;
- le retrait d'une couche de palette (40) de la palette (44) ; et
- la dépose de la couche de palette prélevée (40) sur le support d'étagère (46) de dimensions correspondantes.

9. Procédé selon la revendication 8, dans lequel, lorsqu'un type d'article qui est requis pour réaliser un ordre de commande ne se trouve pas en un nombre prédéterminé d'unités d'emballage (42) dans le rayonnage à supports d'étagères (16), on enlève à chaque fois seulement une couche de palette (40) et on la dépose, et à chaque fois seulement un support d'étagère (46) est amené dans le rayonnage à supports d'étagères (16), jusqu'à ce que le nombre prédéterminé soit atteint dans le rayonnage à supports d'étagères (16).

10. Procédé selon la revendication 9, dans lequel, lorsque le nombre prédéterminé est atteint dans le rayonnage à supports d'étagères (16), la palette (44), de laquelle on a retiré une ou plusieurs couches de palettes (40), est réintroduite dans le rayonnage de magasinage haut (10), lorsque la palette (44) porte encore au moins une couche de palette (40) d'unités d'emballage (42).

11. Procédé selon l'une quelconque des revendications 1 à 10, dans lequel des palettes (44) complètement chargées, qui portent un type d'articles, qui est vendu extrêmement souvent dans des ordres de commande, sont déchargées du rayonnage de magasinage haut (10) et mises à disposition dans une région de passage rapide (26) qui fait partie de l'installation de préparation de commandes (100), afin de pouvoir emballer des unités d'emballage (42) sur un support d'expédition en contournant le rayonnage à supports d'étagères (16).

12. Procédé selon l'une quelconque des revendications 1 à 11, dans lequel l'étape a) comprend :
- le transfert manuel sur des supports d'étagères (46), de couches de palettes (40) qui se composent d'unités d'emballage d'un type d'articles, qui ne peut pas être effectué en machine.

13. Procédé selon l'une quelconque des revendications 1 à 12, dans lequel les supports d'étagères (46) sont triés au cours de l'étape d), afin d'arriver au poste d'emballage (32) conformément à une succession prédéfinie.

14. Procédé selon l'une quelconque des revendications 1 à 12, dans lequel plusieurs ordres de commande sont traités en parallèle.

15. Installation de préparation de commandes (100 ; 100') comprenant un rayonnage de magasinage haut (10), au moins un rayonnage à supports d'étagères (16), au moins un poste d'emballage (20 ; 32), au moins un poste d'expédition (22) et une commande prioritaire, qui est prévue pour produire des ordres pour effectuer les étapes consistant à :
a) dépalettiser par strates (S20) des unités d'emballage (42), qui forment une couche de palette (40), en particulier complète, d'une palette (44), en particulier une europalette, qui porte à chaque fois une pluralité d'unités d'emballage (42) d'un type d'articles à préparer pour la commande, sur un support d'étagère (46) de dimensions correspondantes ;
b) amener (S30) le support d'étagère (46) chargé de la couche de palette (40) dans le rayonnage à supports d'étagères (16), de préférence au moyen d'une technique de transport (14), d'une machine de stockage et/ou d'un monte-charge ;
c) extraire (S40) le support d'étagère (46) chargé de la couche de palette (40) conformément à un ordre de commande ou à plusieurs ordres de commande, en direction du poste d'emballage (20 ; 32) ;
d) prélever un nombre prédéfini par l'ordre de commande ou par l'un des ordres de commande d'unités d'emballage (42) à préparer pour la commande, et emballer les unités d'emballage prélevées (42) sur un support d'expédition, afin d'envoyer le support d'expédition à un donneur d'ordres pour compléter la réalisation de l'ordre de commande;
le support d'étagère (46), après le retrait des unités d'emballage (42), au cas où les unités d'emballage de la couche de palette (40) ne devaient pas toutes être retirées, étant soit ramené dans le rayonnage à supports d'étagères (16), soit séparé en unités d'emballage individuelles (42), qui sont chargées à nouveau sur des supports d'étagères individuels correspondants et ensuite amenées à un rayonnage à supports d'étagères individuel séparé (28), pour ensuite être amenées à nouveau au poste d'emballage (32) en vue de réaliser un autre ordre de commande.
